Europäisches Patentamt

**European Patent Office**

**Office européen des brevets**

(19)

(11) **EP 1 025 426 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(51) Int Cl.7: **G01L 3/12**, G01P 3/486, G01D 5/36

(21) Anmeldenummer: **98958201.0**

(22) Anmeldetag: **19.10.1998**

(86) Internationale Anmeldenummer:
**PCT/DE98/03056**

(87) Internationale Veröffentlichungsnummer:
**WO 99/022211 (06.05.1999 Gazette 1999/18)**

(54) **DREHMOMENTMESSUNG MIT HOHLSPIEGELN AN DER ROTIERENDEN WELLE**

TORQUE MEASUREMENT USING CONCENTRATING REFLECTORS ON THE ROTATING SHAFT

MESURE DU COUPLE A L'AIDE DE MIROIRS CONCAVES SUR L'ARBRE EN ROTATION

(84) Benannte Vertragsstaaten:
**CH DE FR GB LI SE**

(30) Priorität: **23.10.1997 DE 19746886**

(43) Veröffentlichungstag der Anmeldung:
**09.08.2000 Patentblatt 2000/32**

(73) Patentinhaber: **SIEMENS AKTIENGESELLSCHAFT
80333 München (DE)**

(72) Erfinder:
- **GRIEPENTROG, Gerd
  D-91058 Erlangen (DE)**
- **LINS, Günter
  D-91056 Erlangen (DE)**
- **MAIER, Reinhard
  D-91074 Herzogenaurach (DE)**

(56) Entgegenhaltungen:
**EP-A- 0 474 149     GB-A- 2 093 992
GB-A- 2 125 958     JP-A- 60 100 025**

EP 1 025 426 B1

## Beschreibung

Die Erfindung bezieht sich auf eine Vorrichtung zur Drehmomentmessung an rotierenden Drehwellen, insbesondere an Motoren, gemäß dem Oberbegriff des Patentanspruches 1.

In der Praxis besteht die Notwendigkeit, das von Maschinen abgegebene Drehmoment zu erfassen. Bei elektrischen Maschinen soll die Messung insbesondere innerhalb des Motorgehäuses erfolgen können. Aber auch bei der Anwendung von Maschinen in Industrieanlagen, beispielsweise von Elektromotoren zum Antrieb von Walzwerken, muß das Drehmoment genau bestimmt werden können, wobei hier die Messung außerhalb des Motors erfolgen soll.

Das Drehmoment an rotierenden Maschinen wird häufig durch Drehmomentmeßwellen, die zwischen Motor und angetriebener Maschine montiert werden, gemessen. Dabei enthält die Drehmomentmeßwelle eine Achse, deren Torsion beispielsweise über Dehnungsmeßstreifen erfaßt wird. Die Signalübertragung erfolgt in diesem Fall über Schleifringe oder telemetrische Methoden.

Es wurde auch schon vorgeschlagen, über mikromechanisch hergestellte Kondensatoren, die auf der Drehwelle angebracht werden und deren Kapazität durch die Torsion verändert wird, das Drehmoment zu bestimmen (WO-A1-97-9596). Hierzu ist allerdings wiederum eine telemetrische Signalübertragung erforderlich. Daneben können auch Anordnungen mit Oberflächenwellenfiltern zur Torsionsmessung eingesetzt werden.

Weiterhin wird mit dem deutscher. Patent DE-44 28 362 C2 ein Verfahren zur berührungslosen Erfassung der Bewegung, insbesondere der Drehbewegung eines Maschinenteils vorgeschlagen, wobei speziell ein gepulster Lichtstrahl auf eine Meßstelle gerichtet wird, an der sich an dem Maschinenteil in dessen Bewegungsrichtung aufeinanderfolgend angeordnete Markierungen definierter Länge vorbeibewegen und wobei das von den Markierungen reflektierte Licht detektiert und ausgewertet wird. Dieses Verfahren entwickelt ein aus der GB-A-20 93 991 vorbekanntes Verfahren in der Weise weiter, daß der Lichtstrahl derart mit einer vorgegebenen Frequenz gepulst und gebündelt wird, daß er beim Auftreffen auf den Markierungen eine Folge von Lichtpunkten erzeugt, die in einfacher Weise gezählt werden können. Durch zweifache, axial versetzte Messung ist dabei auch eine Drehmomentmessung möglich. Der gepulste Lichtstrahl wird zweckmäßigerweise durch einen Laser erzeugt. Daneben ist aus der GB-A-20 93 992 ein ebenfalls mit gepulsten Lasern arbeitendes Verfahren bekannt, bei dem axial versetzt an zwei Stellen der rotierenden Welle eingestrahlt und durch Definition eines zeitlichen Bezugspunktes für den axialen Versatz der Response-Signale das Drehmoment bestimmt wird. Dieses Verfahren hat sich in der Praxis als nicht funkionsfähig erwiesen.

Aus der US 2 586 540 ist ein Torsionsmesser bekannt, bei dem die Welle optisch abgetastet wird. Weiterhin ist aus der DE 30 11 700 eine Vorrichtung zur lastabhängigen Messung des Drehmomentes einer Drehwelle bekannt, bei der die Drehwelle axial versetzt mit Licht bestrahlt wird und bestrahlungsreflektierende Teilflächen mit der Verdrillung der Drehwelle drehmomentabhängige Response-Signale liefern.

Daneben ist aus der DE 195 23 756 A1 ein die Kraft oder das Drehmoment an einer Arbeitsmaschine erfassender Sensor bekannt, der als opto-elektrischer Sensor ausgebildet ist, welcher wenigstens eine Lichtstrecke generiert, bei der die über die Lichtstrecke übertragene Lichtmenge bzw. deren Größe und Änderung eine Funktion der Kraft oder des Drehmoments an der Maschine ist.

Ausgehend von obigem vielfältigen Stand der Technik ist es Aufgabe der Erfindung, eine praxisgerechte Vorrichtung zur Drehmomentmessung zu schaffen. Eine solche Vorrichtung soll insbesondere in elektrischen Maschinen Verwendung finden können.

Die Aufgabe ist erfindungsgemäß durch die Gesamtheit der Merkmale des Patentanspruches 1 gelöst. Vorteilhafte Weiterbildungen sind in den Unteransprüchen angegeben. Spiegelanordnungen zur Erfassung der Torsion sind zwar bereits in der DE 0 880 510 C2 vorgeschlagen worden. Dazu wird dort die Welle an ihrer Oberfläche teilweise plangeschliffen.

Die erfindungsgemäße Vorrichtung zur Drehmomentmessung umfaßt neben einer Einrichtung zur Erzeugung von Response-Signalen Mittel zur Detektion und Auswertung. Die Einrichtung zur Erzeugung der Response-Signale enthält wenigstens zwei axial gegeneinander versetzte Reflektorsysteme an der Drehwelle der Maschine, die jeweils einzelne Hohlspiegel aufweisen. Jedes Reflektorsystem ist aus einer vorgegebenen Anzahl gleichartiger Hohlspiegel gebildet, die entweder auf einer mit der Drehwelle verbundenen Scheibe als Reflexionsscheibe angebracht sind oder z.B. am Rotor des Motors angebracht sind, derart, daß sie auf einem die Achse der Drehwelle konzentrisch umschließenden Kreis liegen.

Die neue Vorrichtung ist genau und überlastsicher. Es ist eine Messung von Beschleunigungs- und Bremsmomenten in beiden Drehrichtungen möglich. Vorteilhaft ist, daß wie beim bereits einleitend zitierten Stand der Technik keine externen Meßeinrichtungen notwendig sind und daß gleichermaßen über das Drehmomentsignal auch ein Drehzahlsignal verfügbar ist. Durch Hohlspiegel als Reflektoren kann eine Empfindlichkeitssteigerung realisiert werden, die die Möglichkeit in der Auswertung gegenüber dem Stand der Technik weiter verbessert.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen

**EP 1 025 426 B1**

Figur 1     einen gekapselten Elektromotor mit darin befindlichen Meßmitteln zur Drehmomenterfassung sowie einer externen Auswerteeinheit,

Figur 2     die Funktionsweise eines Hohlspiegels auf einer Reflexionsscheibe,

Figur 3     einen Schnitt in Figur 2 entlang der Linie AB,

Figur 4     die Funktionsweise eines Hohlspiegels auf dem Umfang einer Welle und

Figur 5     eine Anordnung zur Strahlauftrennung zur Verwendung bei einer Vorrichtung gemäß Figur 1.

Gleiche bzw. gleichwirkende Teile haben in den Figuren sich entsprechende Bezugszeichen. Die Figuren werden teilweise gemeinsam beschrieben.

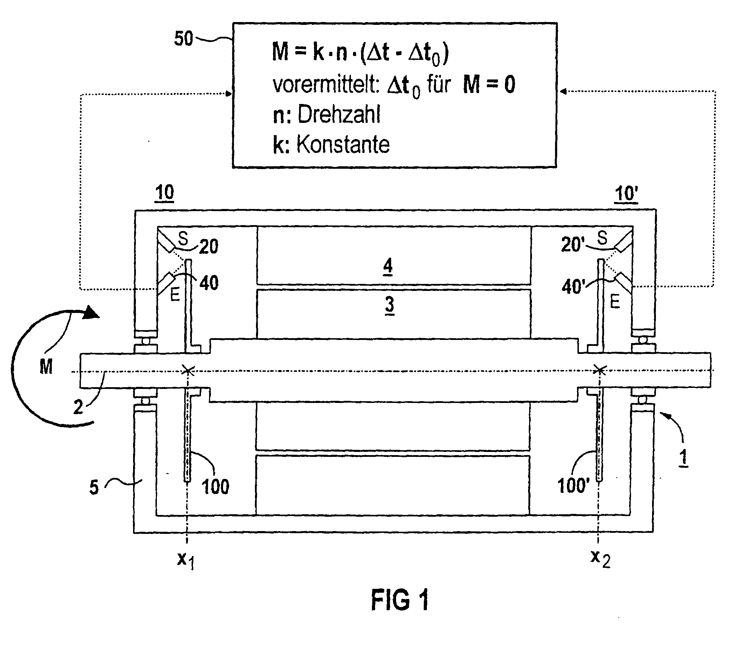

Speziell in Figur 1 ist ein Elektromotor schematisch dargestellt, der im wesentlichen aus einer rotierenden Welle 2 mit Rotor 3 und zugehörigem Stator 4 in einem gekapselten Gehäuse 5 besteht. Durch übliche Auslegung von Rotor- und Statorpaketen ergibt sich die bekannte Funktionsweise des Elektromotors.

Zur Drehzahl- bzw. Drehmomentmessung eines solchen Elektromotors 1 mußten bisher extern Meßmittel an der Drehwelle 2 angebracht werden. Im Beispiel gemäß Figur 1 wird vorgeschlagen, die Meßmittel vorteilhafterweise innerhalb des Gehäuses 5 vorzusehen und in einem extern zugeordneten Prozessor 50 die Auswertung vorzunehmen.

Grundgedanke bei der Anordnung gemäß Figur 1 ist, die Torsion der Welle 2 durch die Anordnung von mindestens zwei Lichtschranken, die an zwei unterschiedlichen axialen Positionen x1 und x2 der Welle 2 angebracht sind, zu erfassen. Solche Lichtschranken können prinzipiell als Reflexions- oder Unterbrecherlichtschranken ausgelegt sein. Ein Response-Signal wird erzeugt, wenn ein mit der Welle 2 fest verbundener und mit der Drehung der Welle 2 um ihre Achse umlaufendes Reflektorsystem 10 die Lichtschranke schließt bzw. wenn ein in analoger Weise angeordneter Unterbrecher die Lichtschranke unterbricht.

Wenn bei einer Anordnung gemäß Figur 1 mit $t_1$ und $t_2$ die Zeitpunkte bezeichnet sind, zu denen die Reflektorsysteme 10 bzw. 10' Signale erzeugen, ergibt sich als Meßgröße die Differenz

$$\Delta t = t_2 - t_1 = \Delta t_0 + \Delta t_M \qquad (1)$$

Die Differenz $\Delta t$ setzt sich dabei zusammen aus einem drehmomentunabhängigen Anteil $\Delta t_0$, der durch einen eventuell konstruktionsbedingten azimutalen Versatz der Reflektorsysteme 10 bzw. 101 sowie konstante Laufzeitdifferenzen entsteht, und einen Anteil

$$\Delta t_M = \frac{M}{k \cdot n} \; , \qquad (2)$$

der durch die vom Drehmoment M bewirkte Torsion der Welle 2 entsteht und dem Quotienten M/n aus Drehmoment M und Drehzahl n proportional ist, wobei k eine Proportionalitätskonstante bedeutet. Das zu bestimmende Drehmoment ergibt sich daraus zu

$$M = kn\,(\Delta t - \Delta t_0). \qquad (3)$$

Die Drehzahl erhält man aus der Frequenz, mit der die Reflektorsysteme 10 bzw. 10' Signale erzeugen.

In der Figur 1 sind bei den beiden axial versetzten Reflektorsystemen 10 bzw. 10' jeweils der Sender für Lichtstrahlung mit 20 bzw. 20' und der zugehörige Empfänger mit 40 bzw. 40' bezeichnet. In praxisgerechter Realisierung können statt jeweils eines Reflektorsystems 10 oder 10' bzw. Unterbrechers jeweils eine Anzahl N von Reflektoren 11, 11', 11", ... bzw. Unterbrechern auf einem die Welle 2 konzentrisch umschließenden Kreis auf einer Scheibe 100 angeordnet sein. Dadurch sind während eines Umlaufes N Messungen des Drehmomentes und der Umdrehungszahl möglich, wie dies auch bereits beim Stand der Technik realisiert wird. Dabei ist es zweckmäßig, vom Sender 20, der vorteilhafterweise durch einen kontinuierlich abstrahlenden Laser bzw. eine geeignete Leuchtdiode realisiert wird, die Lichtstrahlung über eine Linse 25 zu bündeln sowie fokussiert auf wenigstens einen der Reflektoren 11, 11', 11", ... einzustrahlen und anschließend die reflektierte Strahlung dem Empfänger 40 zuzuführen.

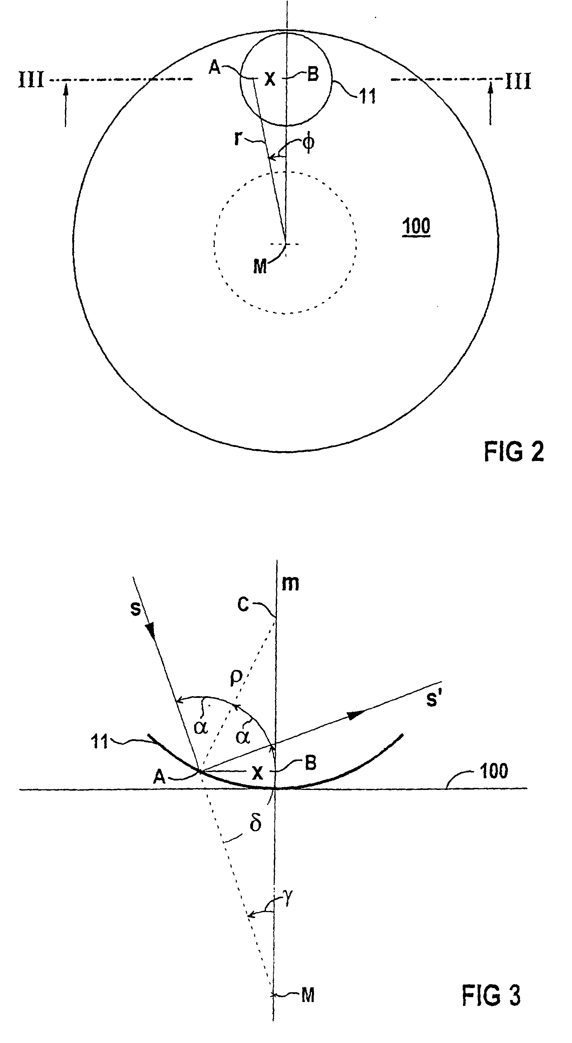

Wegen der nur äußerst geringen Wellentorsion, die bei Elektromotoren bei Nenndrehmoment in der Größenordnung von 0,05° liegt, ist es für die Funktion der beschriebenen Anordnung wesentlich, daß die Reflektoren so gestaltet und angeordnet sind, daß die meßbare Strahlablenkung ein Mehrfaches des Drehwinkels der Welle beträgt. Dies wird durch den Einsatz von Hohlspiegeln erreicht, wie es für das Ausführungsbeispiel der Figur 1 anhand der Figuren 2 und 3 verdeutlicht wird.

Figur 2 zeigt eine Reflexionsscheibe 100, auf der im Abstand $r$ vom Mittelpunkt M ein Spiegel 11 mit dem Krümmungsradius $\rho$ so angeordnet ist, daß seine Mittelsenkrechte $m$ senkrecht auf der Scheibe 100 steht. Ein Schnitt entlang der Linie AB wird in Figur 3 gezeigt.

Ein Lichtstrahl $s$ trifft den Spiegel 11 im Punkt A derart, daß seine Verlängerung mit der Mittelsenkrechten $m$ den Winkel $\gamma$ einschließt. In Figur 2 ist die Lage von A durch den Winkel $\phi$ und den Abstand $r$ vom Mittelpunkt M der Scheibe 100 gekennzeichnet. Der Abstand $x$ ist klein gegen $2\pi r$, so daß in guter Näherung gilt $x = r\phi$ (Winkel $\phi$ im Bogenmaß). Der reflektierte Strahl $s'$ wird aus der Richtung des einfallenden Strahl $s$ um den Winkel $\delta$ abgelenkt. Aus elementaren geometrischen Überlegungen folgt:

$$\delta = \pi - 2\gamma + 2\arcsin\frac{r\phi}{\rho} \qquad\qquad (4)$$

Die Winkelempfindlichkeit, definiert als die Ableitung des Ablenkwinkels $\delta$ nach dem Drehwinkel $\phi$, ergibt sich zu:

$$\frac{d\delta}{d\phi} = 2\frac{r}{\rho\sqrt{1-\left(\frac{r\phi}{\rho}\right)^2}} \qquad\qquad (5)$$

In typischen Anwendungen ist beispielsweise $r = 100$ mm und $\rho = 25$ mm. Für $\phi = 0$ erhält man $d\delta/d\phi = 8$. Eine Änderung des Winkels $\phi$ durch die Drehung der Welle überträgt sich also in eine achtfache Änderung des Ablenkwinkels $\delta$.

Bei unendlich großem Krümmungsradius ($\rho \to \infty$) geht (1) in den Ausdruck für die Ablenkung durch einen Planspiegel über:

$$\delta = \pi - 2\gamma \qquad\qquad (6).$$

Aus Gleichung (6) folgt, daß bei einem Planspiegel in der hier vorausgesetzten axialen Montage die Ablenkung $\delta$ nicht vom Winkel $\phi$ und somit nicht von der Position der Scheibe 100 abhängt, die den Spiegel 11 trägt. Licht wird vielmehr so lange, und zwar unter immer dem gleichen Winkel, reflektiert, wie der Strahl den Planspiegel trifft. In diesem Ausführungsbeispiel ist also die Ausbildung des Reflektors als Hohlspiegel für die Abhängigkeit des Ablenkwinkels vom Drehwinkel und damit für das Funktionieren der erfindungsgemäßen Vorrichtung unbedingt notwendig.

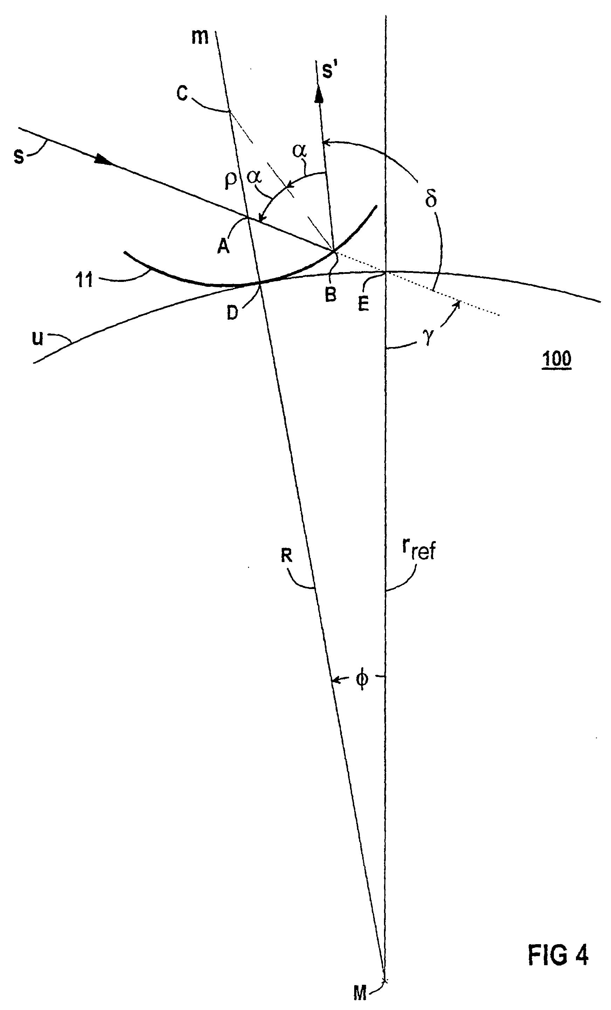

In einem anderen Ausführungsbeispiel, das in Figur 4 ausschnittsweise und schematisch dargestellt ist, ist ein Spiegel 11 mit dem Krümmungsradius $\rho$ so auf dem Umfang $u$ einer Motorwelle angeordnet, daß seine Mittelsenkrechte $m$ radial bezüglich des Mittelpunktes M des kreisförmigen Querschnitts der Welle verläuft und mit einer ebenfalls radialen Referenzlinie $r_{ref}$ den Winkel $\phi$ einschließt. Gegebenenfalls ist auf dem Umfang $u$ auch eine nichtradiale Montierung des Spiegels möglich, bei der Radius der Welle und Symmetrielinien des Spiegels nicht übereinstimmen.

Aus der geometrischen Darstellung der Figur 4 lassen sich folgende Bedingungen ableiten: Gegeben sei ein Lichtstrahl $s$, der mit der Referenzlinie $r_{ref}$ den Winkel $\gamma$ einschließt. Der Bewegungszustand der Motorwelle sei derart, daß der Strahl in einem Punkt B den Spiegel 11 trifft, und ihn als reflektierter Strahl $s'$ verläßt. Der Ablenkwinkel $\delta$, der die Richtungsänderung des Strahls $s$ bei der Reflexion angibt, ist eine Funktion des Drehwinkels $\phi$, der sich bei der Drehung der Welle ändert. Elementare trigonometrische Überlegungen führen zu dem Ergebnis, daß die Strahlablenkung $\delta$ in diesem Fall gegeben ist durch:

$$\delta = \pi - 2\arcsin\left\{\sin(\gamma - \phi) - \frac{R\phi}{\rho}\cos(\gamma - \phi)\right\} \quad, \qquad\qquad (7)$$

wobei $R$ der Radius des Querschnitts der Welle ist. Die Empfindlichkeit ist definiert als:

$$\frac{d\delta}{d\phi} = 2\chi \qquad\qquad (8)$$

mit

$$\chi = \frac{\left(\cos(\gamma - \phi)\left(1 + \frac{r}{\rho}\right) + \frac{R\phi}{\rho}\sin(\gamma - \phi)\right)}{\sqrt{1 - \left\{\sin(\gamma - \phi) - \frac{R\phi}{\rho}\cos(\gamma - \phi)\right\}^2}} \qquad (8a)$$

Für unendlich großen Krümmungsradius ρ geht (5) in den entsprechenden Ausdruck für einen Planspiegel über:

$$\left.\frac{d\delta}{d\phi}\right|_{Plan} = 2 \qquad (9)$$

Der Quotient χ aus den Gleichungen (8) und (9) gibt an, um welchen Faktor die Empfindlichkeit durch den Einsatz eines Hohlspiegels im Vergleich zu einem Planspiegel gesteigert wird.

Bei einem Wellenradius von $R$ = 100 mm, einem Krümmungsradius ρ = 25 mm, γ = 45° und φ = 0 ergibt sich beispielsweise χ = 5. Da die Empfindlichkeit der Anordnung mit einem Planspiegel nach (9) 2 beträgt, erhält man in dem betrachteten Beispiel durch den Einsatz eines Hohlspiegels eine Strahlablenkung, die dem Zehnfachen der Änderung des Drehwinkels φ der Welle entspricht.

Entsprechend der Darstellung gemäß Figur 2 können einzelne Hohlspiegel 11, 11', 11" ... konzentrisch umlaufend am Rand der Scheibe 100 entweder axial oder radial ausgerichtet sein. Der Sender 20 für Lichtstrahlung sollte vorteilhaft einen möglichst parallelen, dünnen Lichtstrahl emittieren, wie er beispielsweise durch einen Laser erzeugt wird. Der Strahl kann durch eine geeignete Optik aufgeweitet oder fokussiert oder aber auch durch einen Lichtwellenleiter geführt werden. Im Interesse einer hohen Auflösung soll der Empfänger 40 eine möglichst kleine Empfangsfläche besitzen. Eine weitere Steigerung der Auflösung wird beispielsweise durch zwei Elemente 41, 42 eines Photodioden-Arrays als Empfänger 40 mit einer Ausdehnung von 25 μm erreicht und einen möglichst schmalen Spalt zwischen den Dioden.

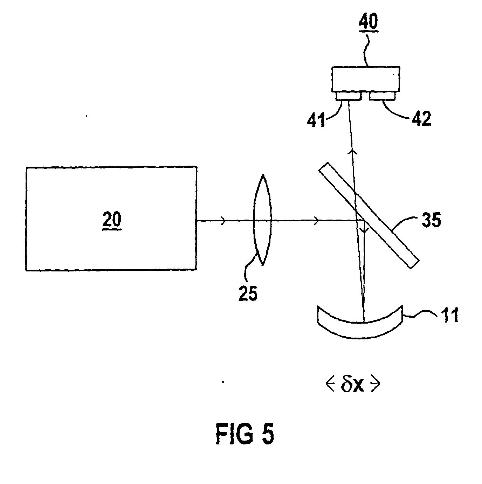

Letzteres ist beispielhaft an Figur 5 dargestellt, wobei in diesem Fall ein teildurchlässiger Spiegel 35 als zusätzliches Mittel zur Vereinfachung der Signalauswertung vorgesehen ist. Eine genaue Zeitmarke, die zur Bestimmung kleinster durch geringe Wellentorsionen hervorgerufener Drehmomente gesetzt wird, kann dadurch erreicht werden, daß das Differenzsignal beider Dioden 41 und 42 Null wird. Der Nulldurchgang des Differenzsignals beider Empfängerelemente 41 bzw. 42 wird somit als jeweilige Zeitmarke exakt definiert.

Für das beschriebene Verfahren können die Abtastsysteme der zugehörigen Vorrichtung vorteilhafterweise in den Lagerschilden des Motors 1 angebracht sein. Der Prozessor 50 gemäß Figur 1 ermittelt nach den vorstehend angegebenen Beziehungen das Drehmoment M und kann gegebenenfalls auch Korrekturen vornehmen.

Bezugszeichenliste

**Figur 1**

1  Maschine, Elektromotor
2  Drehwelle
3  Rotor
4  Stator
5  Gehäuse

$x_1, x_2$  Meßpunkte auf der Drehwelle
10, 10'  Reflektorsysteme
20, 20'  optischer Sender
40, 40'  optischer Empfänger

| 50 | Signalprozessor |
|---|---|

**Figur 2**

| 100 | Scheibe |
|---|---|
| 11, 11', 11" | Hohlspiegel als Reflektoren auf der Scheibe 100 |
| $\frac{d\delta}{d\phi}$ | Verstärkung |
| A, B | Punkte für Schnitt III-III |
| M | Mittelpunkt der Scheibe 100 |
| r | radialer Abstand |
| $\phi$ | Auslenkwinkel |

**Figur 3     Schnitt III III aus Figur 2 zusätzlich zu Figur 2**

| C | Schnittpunkt |
|---|---|
| S | einfallender Strahl |
| s' | reflektierter Strahl |
| m | Mittelsenkrechte |
| $\rho$ | Winkelhalbierende |

$$\left. \begin{array}{c} \alpha \\ \gamma \\ \delta \end{array} \right\} \; \texttt{Winkel}$$

**Figur 4 zusätzlich zu Figur 2/3**

| u | Umfang |
|---|---|
| R | Radius der Welle 100 |
| D, E | Schnittpunkte |
| $r_{ref}$ | Referenzlinie |

**Figur 5**

| 20 | Laser |
|---|---|
| 25 | Linse |
| 35 | teildurchlässiger Spiegel |
| 40 | Emfänger/Photodioden-Array |
| 41, 42 | Einzeldioden des Arrays |
| $\delta x$ | differentielle Auslenkung |

**Patentansprüche**

1. Vorrichtung zur Drehmomentmessung an rotierenden Drehwellen, insbesondere Motoren, die eine Drehwelle aufweisen, wobei axial versetzt an wenigstens zwei Stellen der Drehwelle mittels Lichteinstrahlung auf die rotierende Drehwelle optische Response-Signale erzeugt werden und wobei zur Auswertung der Signale ein über die Verdrehbewegung hinaus erfolgter azimutaler Versatz bestimmt wird, mit jeweils wenigstens einer Lichtquelle und einer zugehörigen Einrichtung zur Erzeugung und Auswertung der Response-Signale, **dadurch gekennzeichnet, daß** die Einrichtung aus wenigstens zwei axial versetzten Reflektorsystemen (10, 10') an der Drehwelle (2) besteht, die jeweils einen Hohlspiegel (11, 11', 11", ...) aufweisen, dem zugehörige Auswertemittel (40, 50) zugeordnet sind.

2. Vorrichtung nach Anspruch 1, **dadurch gekennzeichnet, daß** jedes Reflektorsystem (10, 10') eine vorgegebene Anzahl (N) von gleichartigen Hohlspiegeln (11, 11', 11", ...) konzentrisch zur Drehwelle (2) aufweist.

3. Vorrichtung nach Anspruch 2, **dadurch gekennzeichnet, daß** die Hohlspiegel (11, 11', 11", ...) nahe dem Umfang einer mit der Drehwelle (2) verbundenen Scheibe als Reflexionsscheibe (100) angebracht sind.

4. Vorrichtung nach Anspruch 2, **dadurch gekennzeichnet, daß** die Hohlspiegel auf dem Umfang der Drehwelle (2) angebracht sind.

5. Vorrichtung nach Anspruch 1, **dadurch gekennzeichnet, daß** die Lichtquelle ein kontinuierlich abstrahlender Laser (20) ist.

6. Vorrichtung nach Anspruch 1, **dadurch gekennzeichnet, daß** die Lichtquelle eine Leuchtdiode ist.

7. Vorrichtung nach Anspruch 1, **dadurch gekennzeichnet, daß** zwischen der Lichtquelle (20) und den Hohlspiegeln (11, 11', 11", ...) optische Elemente (25) zur Strahlfokussierung angeordnet sind.

8. Vorrichtung nach Anspruch 5, **dadurch gekennzeichnet, daß** Mittel (35) zur optischen Trennung des eingestrahlten und reflektierten Lichtstrahles vorhanden sind.

9. Vorrichtung nach Anspruch 1, **dadurch gekennzeichnet, daß** zur Auswertung des reflektierten Lichtstrahls ein optischer Empfänger (40) vorhanden ist.

10. Vorrichtung nach Anspruch 9, **dadurch gekennzeichnet, daß** der Empfänger eine Doppel-Photodiode (41, 42) ist.

11. Vorrichtung nach Anspruch 10, **dadurch gekennzeichnet, daß** durch einen Komparator ein exakter Triggerzeitpunkt ermittelt wird, wenn das Lichtsignal auf beiden Diodenhälften gleich stark ist.

12. Vorrichtung nach Anspruch 1, **dadurch gekennzeichnet, daß** ein Abtastsystem aus optischem Sender (20) und Empfänger (40) in den Lagerschilden der Maschine (1) untergebracht ist.

## Claims

1. Apparatus for torque measurement on rotating torque shafts, in particular motors which have a torque shaft, optical response signals being generated in an axially offset fashion at at least two points on the torque shaft by means of irradiating light onto the rotating torque shaft, and an azimuthal offset produced over and above the rotary movement being determined for the purpose of evaluating the signals, and having at least one light source and an associated device for generating and evaluating the response signals, **characterized in that** the device comprises at least two axially offset reflector systems (10, 10') on the torque shaft (2), which in each case have a concave mirror (11, 11', 11", ...) which is assigned associated evaluation means (40, 50).

2. Apparatus according to Claim 1, **characterized in that** each reflector system (10, 10') has a prescribed number (N) of similar concave mirrors (11, 11', 11", ...) in a fashion concentric with the torque shaft (2).

3. Apparatus according to Claim 2, **characterized in that** the concave mirrors (11, 11', 11", ...) are fitted near the circumference of a disc, connected to the torque shaft (2) as reflection disc (100).

4. Apparatus according to Claim 2, **characterized in that** the concave mirrors are fitted on the circumference of the torque shaft (2).

5. Apparatus according to Claim 1, **characterized in that** the light source is a continuously emitting laser (20).

6. Apparatus according to Claim 1, **characterized in that** the light source is a light-emitting diode.

7. Apparatus according to Claim 1, **characterized in that** optical elements (25) for beam focusing are arranged between the light source (20) and the concave mirrors (11, 11', 11", ...).

8. Apparatus according to Claim 5, **characterized in that** means (35) are present for optically separating the irradiated and reflected light beams.

9. Apparatus according to Claim 1, **characterized in that** an optical receiver (40) is present for the purpose of evaluating the reflected light beam.

**10.** Apparatus according to Claim 9, **characterized in that** the receiver is a double photodiode (41, 42).

**11.** Apparatus according to Claim 10, **characterized in that** a comparator determines an exact triggering instant when the light signal is equally strong on both diode halves.

**12.** Apparatus according to Claim 1, **characterized in that** a scanning system comprising an optical transmitter (20) and receiver (40) is accommodated in the end shields of the machine (1).

**Revendications**

**1.** Dispositif pour la mesure du couple d'arbres en rotation, notamment de moteurs, qui comportent un arbre de rotation, dans lequel des signaux de réponse optiques sont produits avec un certain décalage axial en au moins deux points de l'arbre de rotation au moyen d'une émission de lumière sur l'arbre en rotation et dans lequel un décalage azimutal effectué au-delà du mouvement de torsion est déterminé pour l'évaluation des signaux, comportant respectivement au moins une source de lumière et un dispositif associé pour la production et l'évaluation des signaux de réponse, **caractérisé par le fait que** le dispositif est constitué d'au moins deux systèmes réflecteurs (10, 10') qui sont décalés axialement sur l'arbre de rotation (2) et qui comportent chacun un miroir concave (11,11', 11", ...) auquel des moyens d'évaluation associés (40, 50) sont attribués.

**2.** Dispositif selon la revendication 1, **caractérisé par le fait que** chaque système réflecteur (10, 10') comporte un nombre prédéterminé (N) de miroirs concaves du même type (11, 11', 11", ...) et concentriques par rapport à l'arbre de rotation (2).

**3.** Dispositif selon la revendication 2, **caractérisé par le fait que** les miroirs concaves (11, 11', 11", ...) sont placés près de la circonférence d'un disque relié à l'arbre de rotation (2) et servant de disque de réflexion (100).

**4.** Dispositif selon la revendication 2, **caractérisé par le fait que** les miroirs concaves sont placés sur la circonférence de l'arbre de rotation (2).

**5.** Dispositif selon la revendication 1, **caractérisé par le fait que** la source de lumière est un laser (20) à émission continue.

**6.** Dispositif selon la revendication 1, **caractérisé par le fait que** la source de lumière est une diode électroluminescente.

**7.** Dispositif selon la revendication 1, **caractérisé par le fait que** des éléments optiques (25) pour la focalisation du rayon sont placés entre la source de lumière (20) et les miroirs concaves (11, 11', 11", ...).

**8.** Dispositif selon la revendication 5, **caractérisé par le fait que** des moyens (35) sont prévus pour la séparation optique du rayon lumineux émis et du rayon lumineux réfléchi.

**9.** Dispositif selon la revendication 1, **caractérisé par le fait qu'**un récepteur optique (40) est prévu pour l'évaluation du rayon lumineux réfléchi.

**10.** Dispositif selon la revendication 9, **caractérisé par le fait que** le récepteur est une photodiode double (41, 42).

**11.** Dispositif selon la revendication 10, **caractérisé par le fait qu'**un instant de déclenchement précis est déterminé par un comparateur lorsque le signal lumineux est d'intensité identique sur les deux demi-diodes.

**12.** Dispositif selon la revendication 1, **caractérisé par le fait qu'**un système d'analyse composé d'un émetteur optique (20) et d'un récepteur (40) est placé dans les flasques de la machine (1).

$$M = k \cdot n \cdot (\Delta t - \Delta t_0)$$

vorermittelt: $\Delta t_0$ für $M = 0$

n: Drehzahl

k: Konstante

FIG 1

FIG 2

FIG 3

FIG 4

100

$\langle \delta x \rangle$

FIG 5